# EUROPEAN PATENT SPECIFICATION

(11) **EP 2 132 640 B1**
(45) Date of publication and mention of the grant of the patent: **26.04.2017**
(21) Application number: 08730036.4
(22) Date of filing: 15.02.2008
(51) Int. Cl.: G06F 9/455, G06F 15/16, G06F 17/00

(54) **ABSTRACTING OPERATING ENVIRONMENT FROM OPERATING SYSTEM**
ABSTRAHIEREN DER BETRIEBSUMGEBUNG AUS DEM BETRIEBSSYSTEM
ABSTRACTION DE L'ENVIRONNEMENT D'EXPLOITATION D'UN SYSTÈME D'EXPLOITATION

(30) Priority: 09.03.2007 US 684404
(43) Date of publication of application: 16.12.2009
(73) Proprietor: Microsoft Technology Licensing, LLC, Redmond, WA 98052 (US)
(72) Inventor: BRUMME, Christopher Wellington, Redmond, Washington 98052-6399 (US); TROWBRIDGE, Sean Edwin, Redmond, Washington 98052-6399 (US); PAPAEFSTATHIOU, Efstathios, Redmond, Washington 98052-6399 (US); ENDRES, Raymond E., Redmond, Washington 98052-6399 (US); KUPPUSAMY, Ashok, Redmond, Washington 98052-6399 (US); HUNT, Galen C., Redmond, Washington 98052-6399 (US); RUDDER, Eric D., Redmond, Washington 98052-6399 (US); TRIBBLE, Eric Dean, Redmond, Washington 98052-6399 (US); PANDYA, Ravi, Redmond, Washington 98052-6399 (US)
(74) Representative: Grünecker Patent- und Rechtsanwälte PartG mbB
(86) International application number: PCT/US2008/054156
(87) International publication number: WO 2008/112386

(56) References cited:
- EP-A2- 1 508 855
- WO-A2-01/61490
- US-A1- 2006 116 208
- US-B1- 6 687 762
- US-B2- 6 907 610
- US-B2- 7 028 305
- US-B2- 7 032 227

## Description

### BACKGROUND

### 1. Background and Relevant Art

Computer systems and related technology affect many aspects of society. Indeed, the computer system's ability to process information has transformed the way we live and work. Computer systems now commonly perform a host of tasks (e.g., word processing, scheduling, accounting, etc.) that prior to the advent of the computer system were performed manually. More recently, computer systems have been coupled to one another and to other electronic devices to form both wired and wireless computer networks over which the computer systems and other electronic devices can transfer electronic data. Accordingly, the performance of many computing tasks are distributed across a number of different computer systems and/or a number of different computing components.

To perform a typical computing task, an operating system receives commands (either from an application program or a user) and forwards those commands to appropriate physical resources. The physical resources in turn implement lower level operations to perform the computing task.

Most operating systems are designed to perform generic workloads. However, many applications have special requirements that can not be affectively serviced by a generic operating system. For example, multi-code processors can require specialized concurrency software not typically supported by generic operating systems. However, due to the enormous legacy of device drivers, applications, and experienced developers associated with many generic operating systems, it is typically impractical to replace existing generic operating systems with specialized operating systems that include various specialized functionality.

Further, in many computing environments, there is a one to one hosting relationship between an operating system and the hardware. That is, an operating system is designed to run on a specific set of hardware (e.g., specific processor architecture). Due to the correspondence, operating systems are typically limited to running on hardware they were designed for and cannot run on other non-corresponding hardware. Further, most operating systems typically require full control of a system's physical resources. Thus, it is difficult to simultaneously run multiple operating systems (e.g., a specialized operating system and generic operating system) on the same computer system.

Nonetheless, some environments do permit a set of hardware to run multiple instances of a compatible operating system, or even instances of different compatible operating systems, at the same time. Thus, the computer system may be able to utilize more advantageous functionality of different operating systems to facilitate server consolidation, systems management, isolation of untrusted applications (sandboxing), etc.

For example, virtualization is a technique for simulating hardware functionality to enable multiple instances of operating system to run on the same physical resources. Using virtualization, virtual machines can create an illusion to each operating system instance that it owns the physical resources (e.g., CPU, memory, storage, network stacks, etc) of the computer system. The virtual machines multiplex communication between the multiple operating system instances and the physical resources to facilitate the illusion. Accordingly, virtualization allows multiple operating system instances to share physical resources with little, if any, modification. However, virtualization also introduces performance overheads due at least in part to the level of indirection between the operating system instances and the physical resources.

Further, virtual machines typically do not indicate to operating systems instances that their access to physical resources is being virtualized. Thus, in a virtualized environment, an operating system instance is typically unaware that it is interacting through a virtual machine and not directly with physical resources. Additionally, there is typically no guarantee that a virtual machine will map to physical resources on a one to one basis. Through abstraction, portions of physical resource functionality may not be made available to an operating system instance. Thus, an operating system instance is prevented from using the physical resource functionality, even though such functionality could benefit the operating system instance.

Further, virtualization typically isolates operating system instances from each other. Thus, in most virtualized environments, different operating system instances (either of the same or different operating systems) are not aware of one another or even that other operating systems are running. Accordingly, while individual functionality of different operating systems can be utilized, operating system instances are prevented from acting cooperatively to perform computing tasks.

Further it is known from EP 1 508 855 A2 a level of abstraction that is created between a set of physical processors in a set of virtual multiprocessors to form a virtualized date centre. This virtualized data centre is described to comprise a set of virtual, isolated systems separated by a boundary referred to as a partition. It is described that each of these systems appears as unique independent virtual multiprocessor computer capable of running a traditional operating system and its applications. Moreover, it is described that this distributed virtual machine monitor architecture is a collection of software that handles the mapping of resources from the physical realm to a virtual realm. Each hardware node, e.g. physical process is associated with a node that executes low-level system software that is a part of the distributed virtual machine monitor architecture, a microkernel and a collection of these instances executing on a number of physical processors from a shared resource cluster.

Moreover, US 2006/116208 A1 describes gaming machines having a universal interface layer linking a gaming platform to a hardware platform. It is described that the universal interface layer is configured such that the gaming platform is hardware platform independent. It is further described that thereby the interchangeability of a platform without a corresponding need to modify another platform is achieved. It is described that the universal interface is to include some or all of the APIs that are needed to facilitate communication into operability between high level and hardware specific gaming machine programs and components.

In addition WO 01/61490 A2 describes the hardware abstraction layer operating as a system architectural layer between a real time operating system and an underlying configurable processor. The hardware abstraction layer provides an abstraction of processor-specific functionality to the operating system. It is described that the hardware abstraction layer abstracts configurable processor features visible to the operating system to provide a uniform, standardized interface between the operating system and the configurable processor on which it runs.

Therefore, it is the object of the present invention to provide an improved methods and systems for running operating systems in different operating environments.

This objective problem is solved by the subject matter of the independent claims.

Preferred embodiments are the subject of the dependent claims.

The present invention extends to methods, systems, and computer program products for abstracting an operating environment from an operating system running in the operating environment. Embodiments of the invention include an operating system that can be run on top of a variety of different underlying operating environments. Within an operating environment, an operating environment abstraction layer abstracts and exposes operating environment resources to the operating system. Accordingly, appropriately configured operating environment abstraction layers provide the operating system with a uniform interface to available resources across the variety of different operating environments. The operating environment abstraction layer and the operating system include adjustable algorithms that can be adjusted to appropriately provide services to requesting applications based on exposed resources of the operating environment.

In some embodiments, an operating system function is performed. An operating environment abstraction layer detects available operating environment resources of the underlying operating environment. The underlying operating environment can be, for example, computer system hardware, a Hypervisor, or even another operating system. The operating environment abstraction layer adjusts abstraction algorithms used to provide operating environment resources to requesting operating systems based on the functionality represented in the detected operating environment resources

The operating environment abstraction layer exposes the detected operating environment resources of the underlying operating environment to the operating system to identify the detected operating environment resources of the underlying operating environment to the operating system. Thus, it may for example, that an operating environment abstraction layer exposes resources of one operating system (providing the underlying operating environment) to another operating system (running on top of the operating environment abstraction layer).

The operating system adjusts the service algorithms used to provide operating system services to requesting applications based on the exposed functionality of the represented in the detected operating environment resources exposed to the operating system. The operating system receives an application program request for an operating system service. The operating system interfaces with the operating environment abstraction layer through the specified interface in accordance with the adjusted service algorithms and the adjusted abstraction algorithms to implement the operating system service for the requesting application.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1A illustrates an example computer architecture that facilitates abstracting an operating environment from an operating system.
Figure 1B illustrates an example computer architecture depicting an execution flow of service calls for an operating system abstracted from its operating environment.
Figures 2A - 2C illustrate example computer architectures abstracting different operating environments from an operating system.
Figures 3A - 3D illustrate example computer architectures abstracting different operating environments from an operating system across different processor modes.
Figure 4 illustrates a flow chart of an example method for performing an operating system function.
Figure 5 illustrates an example flow of context information in an interrupt model for processing asynchronous operations.

### DETAILED DESCRIPTION

The present invention extends to methods, systems, and computer program products for abstracting an operating environment from an operating system running in the operating environment. Embodiments of the invention include an operating system that can be run on top of a variety of different underlying operating environments. Within an operating environment, an operating environment abstraction layer abstracts and exposes operating environment resources to the operating system. Accordingly, appropriately configured operating environment abstraction layers provide the operating system with a uniform interface to available resources across the variety of different operating environments. The operating environment abstraction layer and the operating system include adjustable algorithms that can be adjusted to appropriately provide services to requesting applications based on exposed resources of the operating environment.

In some embodiments an operating system function is performed. An operating environment abstraction layer detects available operating environment resources of the underlying operating environment. The underlying operating environment can be, for example, computer system hardware, a Hypervisor, or even another operating system. The operating environment abstraction layer adjusts abstraction algorithms used to provide operating environment resources to requesting operating systems based on the functionality represented in the detected operating environment resources.

The operating environment abstraction layer exposes the detected operating environment resources of the underlying operating environment to the operating system to identify the detected operating environment resources of the underlying operating environment to the operating system. Thus, it may for example, that an operating environment abstraction layer exposes resources of one operating system (providing the underlying operating environment) to another operating system (running on top of the operating environment abstraction layer).

The operating system adjusts the service algorithms used to provide operating system services to requesting applications based on the exposed functionality of the represented in the detected operating environment resources exposed to the operating system. The operating system receives an application program request for an operating system service. The operating system interfaces with the operating environment abstraction layer through the specified interface in accordance with the adjusted service algorithms and the adjusted abstraction algorithms to implement the operating system service for the requesting application.

Embodiments of the present invention may comprise a special purpose or general-purpose computer including computer hardware, as discussed in greater detail below. Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, computer-readable media can comprise physical (or recordable type) computer-readable storage media, such as, RAM, ROM, EEPROM, CD-ROM or other optical disk storage, magnetic disk storage or other magnetic storage devices, or any other medium which can be used to store desired program code means in the form of computer-executable instructions or data structures and which can be accessed by a general purpose or special purpose computer.

In this description and in the following claims, a "network" is defined as one or more data links that enable the transport of electronic data between computer systems and/or modules. When information is transferred or provided over a network or another communications connection (either hardwired, wireless, or a combination of hardwired or wireless) to a computer, the computer properly views the connection as a computer-readable medium. Thus, by way of example, and not limitation, computer-readable media can also comprise a network or data links which can be used to carry or store desired program code means in the form of computer-executable instructions or data structures and which can be accessed by a general purpose or special purpose computer.

Computer-executable instructions comprise, for example, instructions and data which cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

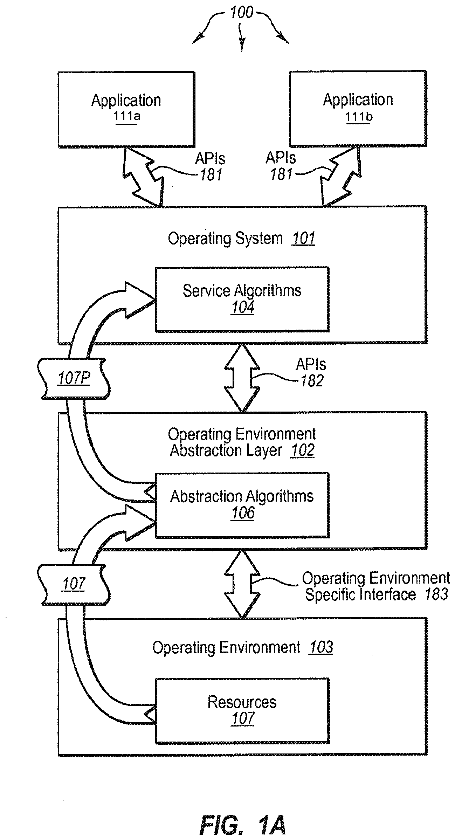

Figure 1A illustrates an example computer architecture 100 that facilitates abstracting an operating environment from an operating system. As depicted computer architecture 100 includes operating system 101, operating environment abstraction layer 102, operating environment 103, and applications 111a and 111b. Operating system 101 can include APIs 181 for interoperating with applications. Applications 111a and 111b can be configured for interoperation with operating system through APIs 181. Accordingly, applications 111a and 111b can call on operating system 101 through APIs 181 to request operating system services. Service algorithms 104 can process application requests and provide operating system services in response to application requests.

Operating system 101 can include APIs 182 for interoperating with operating environment abstraction layer 102. APIs 182 can include a variety of different types of APIs, such as, for example, initialization APIs, interrupt management APIs, timer APIs, transport APIs (e.g., related to pipes, sockets, shared memory, etc), service extension APIs, multi-processor APIs, thread local storage APIs, etc.

Operating environment abstraction layer 102 is configured to interoperate with operating system 101 through APIs 182. Operating environment abstraction layer 102 is also configured to interoperate with operating environment 103 through various operating environment specific interfaces 183. Accordingly, operating environment abstraction layer 102 can access resources of operating environment 103 through operating environment specific interfaces 183. Abstraction algorithms 106 can be used to determine what portions of resources 107 are to be exposed to operating system 101 and to determine how portions of resources 107 are to be exposed to operating system 101. Operating environment abstraction layer 102 can then expose portions of resources 107 to operating system 101 through APIs 182 in accordance with the determinations of abstraction algorithms 106. For example, operating environment 103 can expose resource portions 107P to operating system 101.

Abstraction algorithms 106 are adjustable. Operating environment abstraction layer 102 can automatically adjust abstraction algorithms 106 based on the functionality of operating environment 103 represented in resources 107. For example, algorithms 106 can include a plurality of different abstraction algorithms for exposing resources. Based on the functionality represented in resources 107, operating environment abstraction layer 102 can transition to using a specified subset of abstraction algorithms 106 suitable for more effectively exposing the represented functionality.

Accordingly, abstraction algorithms 106 can be customized for interoperating with operating environment 103. For example, it may be that operating environment 103 exposes a complete service as well as individual resources that can be combined into the complete service. Thus, operating environment abstraction layer 102 can adjust abstraction algorithms 106 to expose the complete service but not necessarily expose the individual resources. Operating environment abstraction layer 102 can provide support for a variety of different services to operating system 101, including page tables, device drivers, power management, memory allocation, network communication transports, processor objects (e.g., interrupt management), etc.

Service algorithms 104 are also adjustable. Operating system 101 can automatically adjust service algorithms 104 based on the functionality represented in resource portions 107P. For example, algorithms 104 can include a plurality of different services algorithms for providing operating system services. Based on the functionality represented in resource portions 107P, operating system 101 can transition to using a specified subset of service algorithms 104 suitable for providing operating system services to requesting applications. Operating system 101 can adjust service algorithms 104 to more effectively utilize resource portions 107P.

Accordingly, service algorithms 104 can be customized for interoperating with exposed portions of operating environment 103. For example, it may be that resource portions 107P indicate that operating environment 103 can provide communication stack functionality. Thus, operating system 101 can adjust service algorithms 104 to utilize the provided communication stack functionality instead of creating a communication stack at operating system 101.

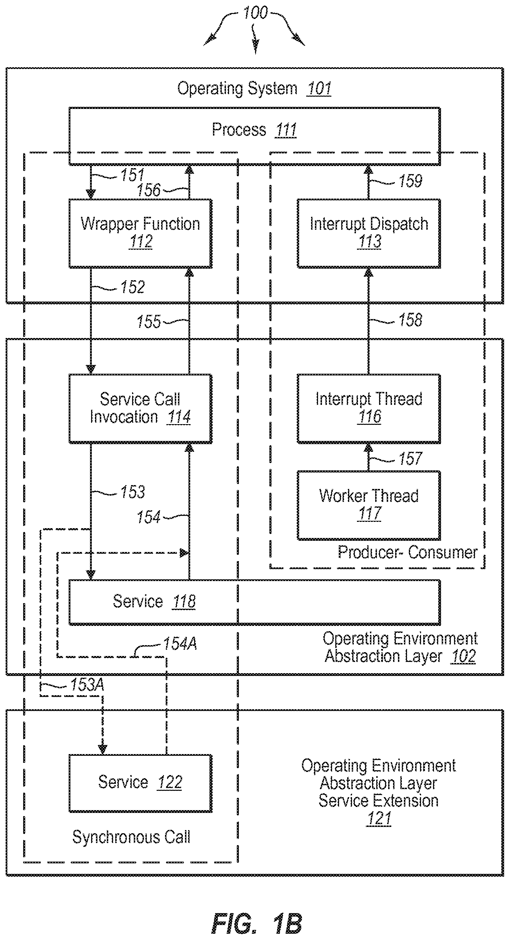

Figure 1B illustrates example computer architecture 100 depicting an execution flow of service calls for an operating system 101. Operating system 101 can submit and operating environment abstraction layer 102 can process are variety of different types of calls, including synchronous calls, producer-consumer calls, and asynchronous calls.

For example, operating system 101 can issue synchronous calls to operating environment abstraction layer 102. Synchronous calls include operations such as, for example, opening a network socket or displaying a string of text on the console. To initiate an synchronous call, process 111 submits call 151 to wrapper function 112, which provides an interface to the underlying operating environment abstraction layer call. Wrapper function 112 hides the implementation details by abstracting the underlying mechanism of operating environment abstraction layer 102 from process 111. For example, a wrapper to communication service can provide a network transport based interface independently of the underlying transport that operating environment abstraction layer 102 exposes. The network transport based interface might be implemented as a ring buffer when the underlying transport is shared memory and events or might be a wrapper for a named pipe transport. However, the wrapper function abstracts these details from operating system 101.

Wrapper function 112 submits call 152 to service call invocation 114. Thus, wrapper function 112 invokes a service of operating environment abstraction layer 102 defined in a class that wraps an operating environment abstraction layer function hosted in the source code for operating environment abstraction layer 102. The wrapper class can define specific attributes for the invocation of the service wrapper function. In addition, the class can include other definitions such as error codes and flags used by the service.

Service call invocation 114 receives call 152. Service call invocation issues invocation 153 to invoke service 118. Service 118 can be executed though an invocation model hosted in source code for operating environment abstraction layer 102. The call to service 118 can disable interrupts and call the service 118 exposed as a function pointer in the API structure of APIs 182.

Service 118 returns appropriate data 154 (status information and a result), such as, for example, a pointer to communication channel, in response to the service invocation.

In some embodiments, service invocations are passed out to operating environment abstraction layer service extensions. Operating environment abstraction layer 102 can load service extensions, such as, for example, operating environment abstraction layer service extension 121, in the form of Dynamic Link Libraries ("DLLs"). Operating environment abstraction layer 102 can bind operating environment abstraction layer service extension 121 to operating system 101. Thus, operating system can submit calls that are utilizable serviced at environment abstraction layer service extension 121. For example, as indicated by call 153A and data 154A, service 122 can be invoked and return appropriate data. Accordingly, the functionality of an operating environment abstraction layer can be extended through extensions without having to significantly modify the operating environment abstraction layer.

Service invocation 114 then returns result 155 (including at least appropriate data 154) to wrapper function 112. Wrapper function 112 processes result 155 and returns result 156 (also including at least appropriate data 154) to process 111. If an error condition is detected, wrapper function 112 can raise an exception to process 111.

Producer-Consumer calls are produced at a worker thread (producer) within operating environment abstraction layer 102 that uses the interrupt notification mechanism to notify operating system 101 (consumer) for the completion of an operation. An example of such a service is the keyboard that creates notification events each time a key is pressed and processed by operating system 101.

For example, worker thread 117 can produce call 157 to interrupt thread 116. A worker thread can be used for APIs in APIs 182 that are asynchronous or services that follow the producer-consumer model. In either case, the worker thread can be a loop that captures the notification of a system event, such as, for example, completion of an I/O call or a keyboard event. Each worker thread can be associated with an interrupt thread similar to interrupt thread 116. The worker thread creates context information regarding the event and sets an event that wakes up the interrupt thread 116. The following code shows an skeletal example of a worker thread loop:
while (1)

```
 {
     // Wait for next event
     // Create interrupt context
     // Signal interrupt thread and wait for completion
     // of interrupt dispatch
     ::SignalObjectAndWait(
            // signal the InterruptWorker
            processor->ioscomm.waitHandle,
            // wait for interrupt dispatch
            processor->ioscomm.completionHandle,
            // no time out
            INFINITE,
            // N/A
            FALSE
     );
     }
```

Interrupt thread 116 submits call 158 to raise interrupt dispatch function 113. Interrupt dispatch function retrieves the interrupt context, calls the service interrupt call (e.g., hosted in a wrapper class of operating system 101), and clears the interrupt context. Following is an example of a keyboard interrupt dispatch call: if (interrupt == Kernel.ABSTRACTION LAYERKeyboardInterrupt)

```
 {
     // Retrieve the interrupt context (the key pressed)
      uint key = (uint)GetABSTRACTION_LAYERInterruptContext(interrupt);
     // Call wrapper class to
     EnlightenedKeyboard.SetKeyAvailable(key);
     ClearABSTRACTION_LAYERInterrupt(interrupt);
     }
```

Interrupt dispatch 113 can submit call 159 to process 111 that will raise an event to wake up a wrapper function (e.g., wrapper function 112) that is waiting for the result of the asynchronous or producer-consumer operation.

Operating system 101 can also submit asynchronous calls to operating environment abstraction layer 102. For example, it may be that call 151 is an asynchronous call. Asynchronous calls are processed using an interrupt notification mechanism is used to notify operating system 101 when the execution of the operation has been completed. Examples of asynchronous calls included Read and Write named pipe operations provided in a communication service of operating environment abstraction layer 102. Producer-Consumer calls have the potential of block. Thus, in some embodiments the operating environment abstraction layer can implement Prouder-Consumer calls as asynchronous operations.

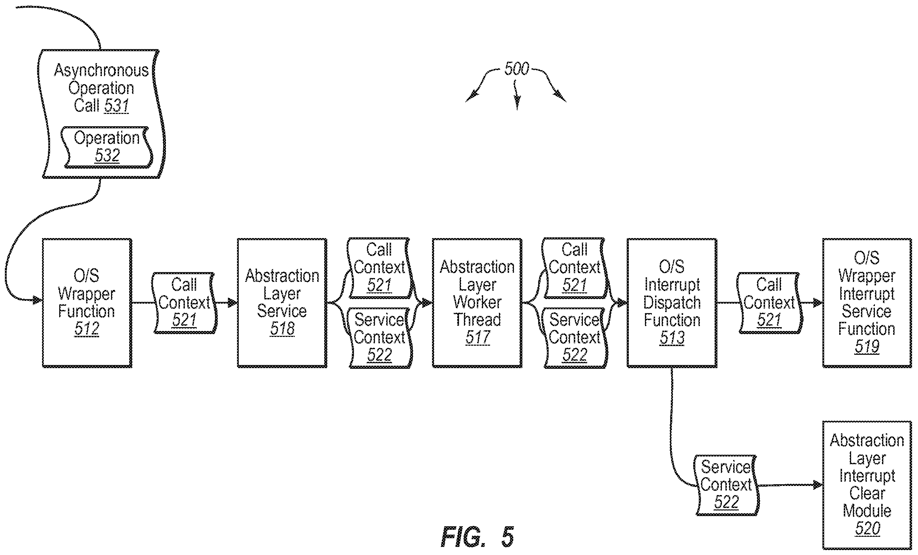

An interrupt model can be used as the paradigm for notification of asynchronous operations. Figure 5 illustrates an example flow 500 of context information in an interrupt model for processing asynchronous operations. An operating system wrapper function (e.g., similar to wrapper function 112) receives an asynchronous call to perform an operation. For example, operating system wrapper function 512 can receive asynchronous operation call 531 requesting that operation 532 be performed. In response to the asynchronous call, the operating system wrapper function creates a context structure that includes context information relevant to the specific request. The context information can include a reference to the event that is to be signaled when the operation completes. For example, operating system wrapper function 512 can create call context 521 referencing an event that is to be called when an operation 532 completes.

The wrapper function passes the context to an operating environment abstraction layer service (e.g., similar to service 118). For example, system wrapper function 512 can pass call context 521 to abstraction layer service 518. The abstraction layer service can also create its own service context, capturing the context from the wrapper function with additional information, such as, for example, the type of operation or other information that may be useful (or required) to process the results of the operation upon completion. For example, abstraction layer service 518 can create service context 522 indicating an operation type for operation 532 and/or other results processing information corresponding to operation 532.

When the operation completes, a worker thread uses the service context to post process the results of the operation. For example, when operation 532 completes, worker thread 117 can user service context 522 to post process the results of operation 532. The worker thread then dispatches an interrupt passing the call context and the service context to an interrupt dispatch function. For example, worker thread 117 can pass call context 521 and service context 522 to operating system interrupt dispatch function 513.

The interrupt dispatch function calls an operating system interrupt dispatch function with the call context. For example, operating system interrupt dispatch function 513 can all operating system wrapper interrupt server function 519 with call context 521. The operating system interrupt dispatch function can store the results or the status of the operation in the context of the wrapper function and then raise the event to wake up the operating system thread to indicate that the operation has completed. For example, operating system wrapper interrupt server function 519 can store results or the status of operation 532 and raise an event to indicate to the thread that sent asynchronous operation call 531 that operation 532 has completed. The following is an example of a communication service dispatch code:

```
 // Dispatch completed async op
 public static unsafe void Dispatch(void* context,ulong err)
 {
     AsyncOpContext* pContext = (AsyncOpContext*)context;
     // Store return status code in local context
     pContext->err = err;
     // Signal client that operation completed
     AutoResetEvent signal = SignalList[pContext->signal];
     if( signal != null )
            signal.Set();
 }
```

The operating system interrupt dispatch function can also call an interrupt clear function (e.g., from an fClearInterrupt Class) at the abstraction layer to deallocate the service context information and perform any other clean up operations. For example, operating system interrupt dispatch function 513 can call Abstraction layer interrupt clear module 520 to de allocated service context 522 and perform clean up operations related to the completion of operation 532. The following is an example of interrupt clearing code for a communication service: void Win32ClearInterrupt(int interrupt)

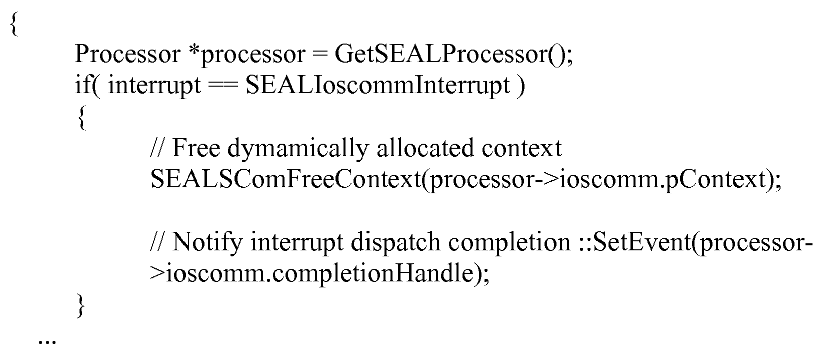

In the above code there is an event notification that the interrupt context has been dispatched. To avoid a race condition between the worker thread (e.g., 517) and the interrupt dispatch function (e.g., 513), the interrupt worker thread can be raised at the end of the worker thread loop and the code waits for a signal that the dispatch operation has been completed prior to continuing the next loop interaction. The interrupt clear function signals the worker thread to continue. The worker thread can loop similar to the skeletal loop described above with respect to process-consumer calls.

Using the various invocation models, different operating environment abstraction layers can be configured to abstract a plurality of different operating environments to provide a uniform set of functionality. A uniform set of functionality can be provided through abstraction algorithms, for example, similar to abstraction algorithms 106, which account for the differences in operating environments. Accordingly, an operating system that utilizes the uniform set of functionality can be run in any of the plurality of different operating environments.

Further (e.g., during initialization), abstraction layers can be configured to analyze and become fully aware of their operating environment, including identifying the presence of other abstraction layers. Thus, an abstraction layer can be specifically designed to take advantage of the characteristics of a corresponding operating environment. Abstraction layers can also be configured to access services provided by the operating environment of other identified abstraction layers.

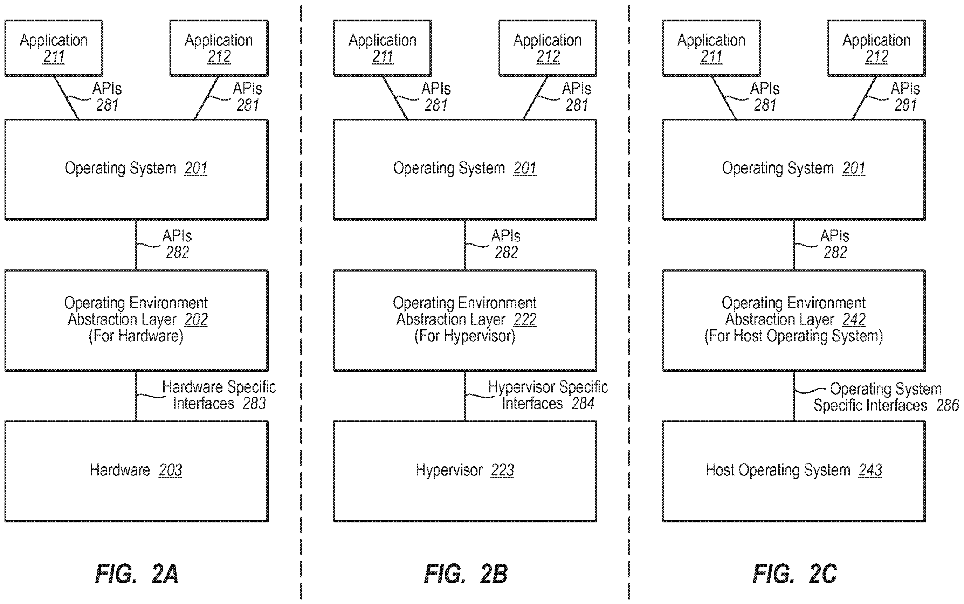

Figures 2A - 2C illustrate example computer architectures abstracting different operating environments from an operating system. As depicted in Figure 2A, operating environment abstraction layer 202 (for hardware) utilizes hardware specific interfaces to abstract hardware 203 (e.g., bare metal). In Figure 2B, operating environment abstraction layer 222 (for Hypervisor) utilizes Hypervisor specific interfaces 284 to abstract hypervisor 223. In Figure 2C, operating environment abstraction layer 242 (for host operating system) utilizes operating system specific interfaces 286 to abstract host operating system 243 (e.g., Windows NT, Windows CE, Linux). However, each of operating environment abstraction layer 202 (for hardware), operating environment abstraction layer 222 (for Hypervisor), and operating environment abstraction layer 242 (host operating system) support communications with operating system 201 via APIs 282.

Since resources of an operating environment are accessed by a corresponding abstraction layer and exposed to operating system 201, operating system 201 is aware of the properties of its execution environment. Accordingly, resource management can be customized to the requirements of the operating system 201 and the workload that is running. Thus, abstraction algorithms and service algorithms (in operating system 201, for example, similar to service algorithms 104) can be adjusted for more effectively operation within the operating environment. For example, when operating system 201 runs on hypervisor 223, a hypervisor scheduler can be exposed to operating system 201. Accordingly, the CPU scheduler of operating system 201 can adjust its policy to meet the requirements of the hypervisor scheduler.

Device drivers and operating system services can be implemented natively by operating system 201 or can be forwarded to be executed in the operating environment (e.g., in host operating system 243).

In some embodiments, operating system 201 is the operating environment. For example, it may be that host operating system 243 is an instance of operating system 201. Thus, one instance of operating system 201 can be recursive run on top of another instance of operating system 201. This type of recursion can be used to create isolated execution environments, for example, for self-hosting and the implementation of Common Language Runtime ("CLR") like application domains.

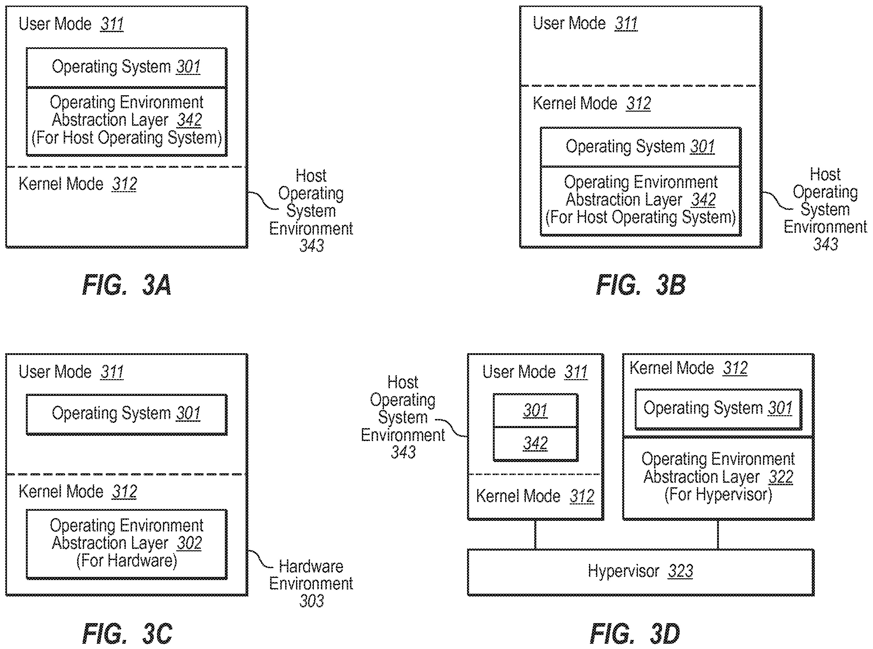

An operating system and corresponding abstraction layer can be run in flexible combinations of privileged and unprivileged processor modes (sometimes referred to as execution rings). Figures 3A - 3D illustrate example computer architectures abstracting different operating environments from an operating system across different processor modes. Figure 3A depicts host operating system environment 343. Within host operating system environment 343 in Figure 3A, both operating system 301 and operating environment abstraction layer 342 (for host operating system) are running in user mode 311 (ring 3).

Figure 3B also depicts host operating system environment 343. However, within host operating system environment 343 in Figure 3B, both operating system 301 and operating environment abstraction layer 342 (for host operating system) are running in kernel mode 312 (ring 0). The embodiment depicted in Figure 3B permits a separate execution environment to exist within host operating system environment 343. The separate execution environment can be used, for example, to host device drivers. The operating system 301 execution environment isolates the execution of drivers from the kernel to allow graceful device driver failure recovery.

Figure 3C depicts hardware environment 303 (e.g., bare metal). Within hardware environment 303, operating system 301 is running in user mode 311 (ring 3) and operating system abstraction layer 302 (for hardware) is running in kernel mode 312 (ring 0).

Figure 3D depicts an instance of host operating system environment 343 from Figure 3A running on top of Hypervisor 323. Figure 3D also depicts an instance of operation system 301 running in kernel mode 312 (ring 0) on top of operating environment abstraction layer 322 (for Hypervisor). Within Figure 3D, operating environment abstraction layer 322 (for Hypervisor) is aware of the existence of host operating system environment 343 and can take advantage of the services provided by host operating system environment 343. The combination of operating system 301 and operating environment abstraction layer 342 (for host operating system) can act as a proxy to services (e.g., device drivers) provided by host operating system environment 343. Alternately, the combination of operation system 301 and operating environment abstraction layer 322 (for Hypervisor) can directly communicate with the services of host operating system environment 343.

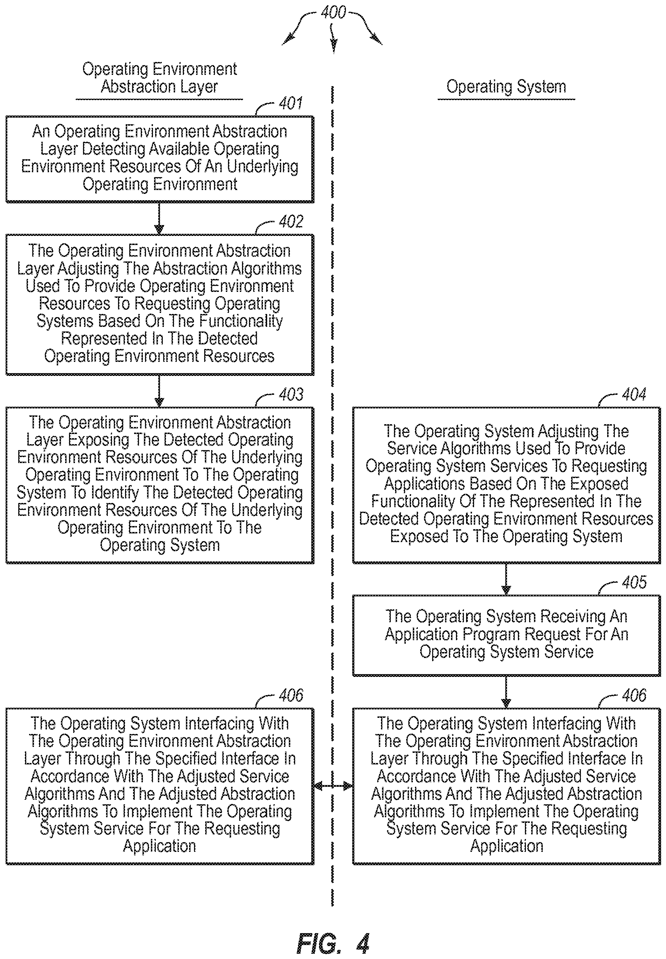

Figure 4 illustrates a flow chart of an example method 400 for performing an operating system function. Method 400 will be described with respect to the components and data depicted in computer architecture 100.

Method 400 includes an act of an operating environment abstraction layer detecting available operating environment resources of an underlying operating environment (act 401). For example, operating environment abstraction layer 103 can detect resources 107 of operating environment 102. Method 400 includes an act of the operating environment abstraction layer adjusting the abstraction algorithms used to provide operating environment resources to requesting operating systems based on the functionality represented in the detected operating environment resources (act 402). For example, operating environment abstraction layer 102 can adjust abstraction algorithms 106 based on the functionality represented in resources 107.

Method 400 includes an act of the operating environment abstraction layer exposing the detected operating environment resources of the underlying operating environment to the operating system to identify the detected operating environment resources of the underlying operating environment to the operating system (act 403). For example, operating environment abstraction layer 102 can expose resource portion 107P to operating system 101. Method 400 includes an act of the operating system adjusting the service algorithms used to provide operating system services to requesting applications based on the exposed functionality of the represented in the detected operating environment resources exposed to the operating system (act 404). For example, operating system 101 can adjust service algorithms 104 based on exposed functionality represented in resource portion 107P.

Method 400 includes an act of the operating system receiving an application program request for an operating system service (act 405). For example, operating system 101 can receive a request from application 111a or 111b for an operation system service. Method 400 includes an act of the operating system interfacing with the operating environment abstraction layer through the specified interface in accordance with the adjusted service algorithms and the adjusted abstraction algorithms to implement the operating system service for the requesting application (act 406). For example, operating system 101 and operating environment abstraction layer 102 can interface through APIs 182 in accordance with the adjusted service algorithms 104 and the adjusted abstraction algorithms 106 to implement an operating system service for application 111a or 111b.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

### The following is a list of further preferred embodiments of the invention:

Embodiment 1: At a computer system, the computer system including an operating system, an underlying operating environment, and an operating environment abstraction layer situated between the operating system and the underlying operating environment, the underlying operating environment configured to provide operating environment resources to other software modules, the underlying operating environment being one of a plurality of different operating environments that can provide operating environment resources to other software modules, the operating system configured to provide operating system services to requesting application programs using any of a plurality of different adjustable service algorithms, the operating system providing operating system services based on exposed operating environment resources of an identified underlying operating environment from among the plurality of different underlying operating environments, the operating system having a specified interface for interacting with other software modules, the operating environment abstraction layer communicatively coupled to the operating system and the underlying operating environment, the operating environment abstraction layer specifically designed to abstract the underlying operating environment from the operating system and to adjustably interface with the operating system through the specified interface using any of plurality of different adjustable abstraction algorithms such that the operating system can interface with the underlying operating environment through the operating environment abstraction layer, a method for performing an operating system function, the method comprising:
   an act of the operating environment abstraction layer detecting available operating environment resources of the underlying operating environment;
   an act of the operating environment abstraction layer adjusting the abstraction algorithms used to provide operating environment resources to requesting operating systems based on the functionality represented in the detected operating environment resources;
   an act of the operating environment abstraction layer exposing the detected operating environment resources of the underlying operating environment to the operating system to identify the detected operating environment resources of the underlying operating environment to the operating system;
   an act of the operating system adjusting the service algorithms used to provide operating system services to requesting applications based on the exposed functionality of the represented in the detected operating environment resources exposed to the operating system;
   an act of the operating system receiving an application program request for an operating system service; and
   an act of the operating system interfacing with the operating environment abstraction layer through the specified interface in accordance with the adjusted service algorithms and the adjusted abstraction algorithms to implement the operating system service for the requesting application.
Embodiment 2: The method as recited in embodiment 1, wherein the act of the operating environment abstraction layer detecting available operating environment resources of the underlying operating environment comprises an act of a hardware abstraction layer detecting available resources of underlying hardware.
Embodiment 3: The method as recited in embodiment 1, wherein the act of the operating environment abstraction layer detecting available operating environment resources of the underlying operating environment comprises an act of a Hypervisor abstraction layer detecting available resources of an underlying Hypervisor.
Embodiment 4: The method as recited in embodiment 1, wherein the act of the operating environment abstraction layer detecting available operating environment resources of the underlying operating environment comprises an act of an operating system abstraction layer detecting available resources of an underlying operating system.
Embodiment 5: The method as recited in embodiment 1, wherein the act of the operating environment abstraction layer detecting available operating environment resources of the underlying operating environment comprises an act of an operating system abstraction layer detecting one or more other operating environment abstraction layers running at the computer system.
Embodiment 6: The method as recited in embodiment 1, wherein the act of the operating environment abstraction layer adjusting the abstraction algorithms used to provide operating environment resources to requesting operating systems comprises an act of customizing the abstraction algorithms for interoperating with the underlying operating environment.
Embodiment 7: The method as recited in embodiment 1, wherein the act of the operating environment abstraction layer exposing the detected operating environment resources of the underlying operating environment to the operating system comprises an act of the operating environment abstraction layer using an API to call the operating system.
Embodiment 8: The method as recited in embodiment 1, wherein the act of the operating system adjusting the service algorithms used to provide operating system services to requesting applications comprises an act of customizing the service algorithms for interoperation with the exposed functionality of the detected operating environment resources.
Embodiment 9: The method as recited in embodiment 1, wherein the act of the operating system interfacing with the operating environment abstraction layer to implement the operating system service for the requesting application comprises an act of the operating system submitting a call to the operating environment abstraction layer, the type of the call selection from among a synchronous call and an asynchronous call.
Embodiment 10: The method as recited in embodiment 1, wherein the act of the operating system interfacing with the operating environment abstraction layer to implement the operating system service for the requesting application comprises an act of the operating environment abstraction layer allocating resources of the underlying operating environment to the operating system.
Embodiment 11: The method as recited in embodiment 1, wherein the act of the operating system interfacing with the operating environment abstraction layer to implement the operating system service for the requesting application comprises an act of the operating environment abstraction layer forwarding the application program request to the underlying operating environment.
Embodiment 12: The method as recited in embodiment 1, wherein the act of the operating system interfacing with the operating environment abstraction layer to implement the operating system service for the requesting application comprises an act of the operating system natively implementing the operating system service.
Embodiment 13: The method as recited in embodiment 1, wherein the operating system runs in a processor mode selected from among user mode and kernel mode.
Embodiment 14: The method as recited in embodiment 12, wherein the operating environment abstraction layer runs in a processor mode selected from among user mode and kernel mode.
Embodiment 15: The method as recited in embodiment 1, wherein the underlying operating environment is an instance of the operating system.
Embodiment 16: A computer program product for use at a computer system, the computer system including an operating system, an underlying operating environment, and an operating environment abstraction layer situated between the operating system and the underlying operating environment, the underlying operating environment configured to provide operating environment resources to other software modules, the underlying operating environment being one of a plurality of different operating environments that can provide operating environment resources to other software modules, the operating system configured to provide operating system services to requesting application programs using any of a plurality of different adjustable service algorithms, the operating system providing operating system services based on exposed operating environment resources of an identified underlying operating environment from among the plurality of different underlying operating environments, the operating system having a specified interface for interacting with other software modules, the operating environment abstraction layer communicatively coupled to the operating system and the underlying operating environment, the operating environment abstraction layer specifically designed to abstract the underlying operating environment from the operating system and to adjustably interface with the operating system through the specified interface using any of plurality of different adjustable abstraction algorithms such that the operating system can interface with the underlying operating environment through the operating environment abstraction layer, the computer-program product for implementing a method for performing an operating system function, the computer program product comprising one or more compute-readable media having stored thereon computer-executable instructions that, when executed at a processor, cause the computer system to perform the method, including the following:
   detect available operating environment resources of the underlying operating environment;
   adjust the abstraction algorithms used to provide operating environment resources to requesting operating systems based on the functionality represented in the detected operating environment resources;
   expose the detected operating environment resources of the underlying operating environment to the operating system to identify the detected operating environment resources of the underlying operating environment to the operating system;
   adjust the service algorithms used to provide operating system services to requesting applications based on the exposed functionality of the represented in the detected operating environment resources exposed to the operating system;
   receive an application program request for an operating system service; and interface with the operating environment abstraction layer through the specified interface in accordance with the adjusted service algorithms and the adjusted abstraction algorithms to implement the operating system service for the requesting application.
Embodiment 17: A computer system, the computer system comprising:
   one or more processors;
   system memory;
   an underlying operating environment;
   one or more computer-readable media having stored there one computer-executable instructions representing an operating environment abstraction layer and an operating system and, the operating environment abstraction layer configured to:
      detect available operating environment resources of the underlying operating environment;
      adjust abstraction algorithms used to provide operating environment resources to requesting computer systems based on the functionality represented in the detected operating environment resources; and
      expose detected operating environment resources of the underlying operating environment to the operating system to identify the detected operating environment resources of the underlying operating environment to the operating system;
      the operating system configured to:
         adjust service algorithms used to provide operating system services to requesting applications based on the exposed functionality of the represented in the detected operating environment resources exposed to the operating system;
         receive application program requests for operating system services; and interface with the operating environment abstraction layer through the specified interface in accordance with the adjusted service algorithms and the adjusted abstraction algorithms to implement operating system services for requesting applications.
Embodiment 18: The system as recited in embodiment 17, wherein the underlying operating environment is an operating environment selected from among hardware, a Hypervisor, an instance of the operating system, and an instance of a second different operating system.
Embodiment 19: The system as recited in embodiment 17, wherein the adjusted abstraction algorithms provide resource management customized to the workload requirements of the operating system.
Embodiment 20: The system as recited in embodiment 17, wherein the operating environment abstraction layer is further configured to:
   detect other operating environment abstraction layers at the computer system; and
   provide resources from the underlying operating environment of another operating environment abstraction layer to the operating system.

## Claims

1. A computer-implemented method being performed in a computer system, the computer system including an operating system (101), an underlying operating environment (103),
and an operating environment abstraction layer (102) situated between the operating system and the underlying operating environment, for providing an operating environment abstraction layer to customize a common set of application programming interfaces (182) that are provided to the operating system that abstracts some operating environment resources (107) while exposing other portions of operating environment resources (107P) such that the operating system is aware of the exposed operating environment resources, the method comprising:
an act of the operating environment abstraction layer (102) detecting available operating environment resources (107) of an underlying operating environment (103), the underlying operating environment comprising one of a computer system hardware (203), a hypervisor (223) or a host operating system (243), wherein the operating environment abstraction layer is configured to communicate with the underlying operating environment via interfaces (283, 284, 286) that are specific to the type of underlying operating environment;
an act of the operating environment abstraction layer determining one or more abstraction algorithms (106) used to determine a subset (107P) of the available operating environment resources (107) to expose to the operating system (101) and to customize a common set of application programming interfaces (182) to expose the subset of the available operating environment resources of the underlying operating environment;
an act of the operating environment abstraction layer exposing the customized common set of application programming interfaces to the operating system to allow the operating system to access the exposed subset of the available operating environment resources of the underlying operating environment
an act of the operating system adjusting service algorithms (104) used by the operating system to provide customized operating system services to requesting applications (111 a, 111 b) based on the exposed functionality represented in the operating environment resources exposed to the operating system;
an act of the operating system receiving an application program request for an operating system service; and
an act of the operating system interfacing with the operating environment abstraction layer through the customized common set of interfaces in accordance with the adjusted service algorithms and the determined one or more abstraction algorithms to implement the operating system service for the requesting application.

2. The method as recited in claim 1, wherein the act of the operating environment abstraction layer (102) detecting available operating environment resources (107) of the underlying operating environment (103) comprises analyzing, during initialization, the operating environment for becoming fully aware of the operating environment, including one or more of:
detecting available resources of underlying hardware (203);
detecting available resources of an underlying Hypervisor (223); and
detecting available resources of an underlying host operating system (243).

3. The method as recited in claim 1, wherein the act of the operating environment abstraction layer (102) exposing the customized set of interfaces to the operating system (101) comprises an act of the operating environment abstraction layer using an API (182) to call the operating system.

4. The method as recited in claim 1, wherein the act of the operating system (101) interfacing with the operating environment abstraction layer (102) to implement the operating system service for the requesting application (111), (112) comprises one or more of:
an act of the operating system submitting a call (114) to the operating environment abstraction layer, the type of the call selected from among a synchronous call and an asynchronous call;
an act of the operating environment abstraction layer forwarding the application program request to the underlying operating environment; and
an act of the operating system natively implementing the operating system service.

5. The method as recited in claim 1, wherein the operating system (101) runs in a processor mode selected from among user mode (311) and kernel mode (312).

6. The method as recited in claim 4, wherein the operating environment abstraction layer (102) runs in a processor mode selected from among user mode (311) and kernel mode (312).

7. The method as recited in claim 1, wherein the underlying operating environment (103) is an instance of the operating system (101).

8. A computer-readable medium having stored thereon computer-readable instructions that, when run on a computer, perform the steps of any of the methods of claims 1-7.

9. A computer system for performing an operating system function by providing an operating environment abstraction layer (102) to customize a common set of application programming interfaces (182) that are provided to an operating system (101) that abstracts some operating environment resources (107) while exposing other portions of operating environment resources (107P) such that the operating system is aware of the exposed operating environment resources, the computer system comprising:
one or more processors;
system memory;
operating system (101) that can be run on top of a variety of operating environments (103), the operating system configured to provide operating system services to requesting application programs (111 a, 111 b) using a determined subset of a plurality of different service algorithms (104), the operating system providing customized operating system services to requesting applications based on exposed functionality represented in operating environment resources (107P) of an underlying operating environment exposed to the operating system, the operating system interfacing with an operating environment abstraction layer (102) through a customized set of interfaces in accordance with adjusted service algorithms and abstraction algorithms to implement an operating system service for an application requesting for the operating system service;
underlying operating environment being one of a computer system hardware (203), a hypervisor (223) or a host operating system (243) and comprising operating environment resources (107), the underlying operating environment configured to provide the operating environment resources (107) to an operating environment abstraction layer (102), the underlying operating environment being one of a plurality of different operating environments that the operating system can run on top of; and
operating environment abstraction layer (102) situated between the operating system (101) and the underlying operating environment (103), the operating environment abstraction layer (102) communicatively coupled to the underlying operating environment via interfaces (283, 284, 286) that are specific to the type of underlying operating environment and being configured to detect available operating environment resources (107) of the underlying operating environment and to determine one or more abstraction algorithms (106) used to determine a subset of the available operating environment resources (107P) to expose to the operating system and to customize an uniform set of programming interfaces to expose the subset of the available operating environment resources of the underlying operating environment, the operating environment abstraction layer further configured for exposing the customized uniform set of programming interfaces to the operating system to allow the operating system to access the exposed subset of the available operating environment resources of the underlying operating environment.

## Patentansprüche

1. Computer-implementiertes Verfahren, das in einem Computersystem durchgeführt wird, wobei das Computersystem ein Betriebssystem (101),
eine zugrunde liegende Betriebsumgebung (103),
und eine zwischen dem Betriebssystem und der zugrunde liegenden Betriebsumgebung gelegene Betriebsumgebungs-Abstraktionsschicht (102) einschließt, zur Bereitstellung einer Betriebsumgebungs-Abstraktionsschicht, um einen gemeinsamen Satz an Anwendungsprogrammierschnittstellen (182) bedarfsgerecht anzupassen, die dem Betriebssystem zur Verfügung gestellt werden, das einige Betriebsumgebungsressourcen (107) herauszieht, während andere Teile von Betriebsumgebungsressourcen (107P) derart offengelegt werden, dass das Betriebssystem die offengelegten Betriebsumgebungsressourcen wahrnimmt, wobei das Verfahren umfasst:
einen Vorgang der Betriebsumgebung-Abstraktionsschicht (102), die verfügbare Betriebsumgebungsressourcen (107) einer zugrunde liegenden Betriebsumgebung (103) zu ermitteln, wobei die zugrunde liegende Betriebsumgebung eine Computersystemhardware (203) oder einen Hypervisor (223) oder ein Host-Betriebssystem (243) umfasst, wobei die Betriebsumgebungs-Abstraktionsschicht so konfiguriert ist, dass sie mit der zugrunde liegenden Betriebsumgebung über Schnittstellen (283, 284, 286) kommuniziert, die spezifisch für die Art der zugrunde liegenden Betriebsumgebung sind;
einen Vorgang der Betriebsumgebungs-Abstraktionsschicht einen oder mehrere Abstraktionsalgorithmen (106) zu ermitteln, die verwendet werden, um eine Teilmenge (107P) der verfügbaren Betriebsumgebungsressourcen (107) festzulegen, und sie dem Betriebssystem (101) offenzulegen, und um einen gemeinsamen Satz an Anwendungsprogrammierschnittstellen (182) bedarfsgerecht anzupassen, um die Teilmenge der verfügbaren Betriebsumgebungsressourcen der zugrunde liegenden Betriebsumgebung offenzulegen;
einen Vorgang der Betriebsumgebungs-Abstraktionsschicht, den bedarfsgerecht angepassten gemeinsamen Satz an Anwendungsprogrammierschnittstellen dem Betriebssystem offenzulegen, um dem Betriebssystem zu ermöglichen, auf die offengelegte Teilmenge der verfügbaren Betriebsumgebungsressourcen der zugrunde liegenden Betriebsumgebung zuzugreifen,
einen Vorgang des Betriebssystems der Anpassung von Dienstalgorithmen (104), die von dem Betriebssystem verwendet werden, um bedarfsgerecht angepasste Betriebssystemdienste an anfordernde Anwendungen (111a, 111b) zu liefern, basierend auf der offengelegten Funktionalität, die sich in den Betriebsumgebungsressourcen ausdrückt, die dem Betriebssystem offengelegt wurden;
einen Vorgang des Betriebssystems, das eine Anforderung eines Anwendungsprogramm nach einem Betriebssystemdienst empfängt; und
einen Vorgang des Betriebssystems, das über den bedarfsgerecht angepassten gemeinsamen Satz an Schnittstellen in Übereinstimmung mit den angepassten Dienstalgorithmen und den ermittelten ein oder mehreren Abstraktionsalgorithmen mit der Betriebsumgebungs-Abstraktionsschicht verbunden ist, um den Betriebssystemdienst für die anfordernde Anwendung zu implementieren.

2. Verfahren nach Anspruch 1, wobei der Vorgang der Betriebsumgebungs-Abstraktionsschicht (102), die verfügbare Betriebsumgebungsressourcen (107) der zugrunde liegenden Betriebsumgebung (103) zu ermitteln, das Analysieren, während des Programmstarts, der Betriebsumgebung umfasst, um sich über die Betriebsumgebung vollständig klar zu werden, wobei ein oder mehrere der nachstehenden Schritte eingeschlossen sind:
Ermitteln der verfügbaren Ressourcen der zugrunde liegenden Hardware (203);
Ermitteln verfügbarer Ressourcen eines zugrunde liegenden Hypervisors (223); und
Ermitteln verfügbarer Ressourcen eines zugrunde liegenden Host-Betriebssystems (243).

3. Verfahren nach Anspruch 1, wobei der Vorgang der Betriebsumgebungs-Abstraktionsschicht (102) den bedarfsgerecht angepassten Satz an Schnittstellen dem Betriebssystem (101) offenzulegen, einen Vorgang der Betriebsumgebungs-Abstraktionsschicht, die ein API (182) verwendet, das Betriebssystem aufzurufen, umfasst.

4. Verfahren nach Anspruch 1, wobei der Vorgang des Betriebssystems (101), das mit der Betriebsumgebungs-Abstraktionsschicht (102) verbunden ist, den Betriebssystemdienst für die anfordernde Anwendung (111), (112) zu implementieren, einen oder mehrere der nachstehenden Vorgänge umfasst:
einen Vorgang des Betriebssystems einen Aufruf (114) an die Umgebungs-Abstraktionsschicht zu senden, wobei die Art des Aufrufs aus einem synchronen Aufruf und einem asynchronen Aufruf ausgewählt ist;
einen Vorgang der Betriebsumgebungs-Abstraktionsschicht der Weiterleitung der Anforderung des Anwendungsprogramms an die zugrunde liegende Betriebsumgebung; und
einen Vorgang des Betriebssystems der standardmäßigen Implementierung des Betriebssystemdienstes.

5. Verfahren nach Anspruch 1, wobei das Betriebssystem (101) in einem Verarbeiter-Modus läuft, der aus einem Verwender-Modus (311) und einem Kernel-Modus (312) ausgewählt ist

6. Verfahren nach Anspruch 4, wobei die Betriebssystem-Abstraktionsschicht (102) in einem Verarbeiter-Modus läuft, der aus einem Verwender-Modus (311) und einem Kernel-Modus (312) ausgewählt ist.

7. Verfahren nach Anspruch 1, wobei die zugrunde liegende Betriebsumgebung (103) eine Instanz des Betriebssystems (101) ist.

8. Computerlesbares Medium mit darauf gespeicherten computerlesbaren Anweisungen, die, wenn sie auf einem Computer laufen, die Schritte nach einem der Verfahren der Ansprüche 1 bis 7 durchführen.

9. Computersystem zur Durchführung einer Betriebssystemfunktion durch Bereitstellen einer Betriebsumgebungs-Abstraktionsschicht (102), um einen gemeinsamen Satz an Anwendungsprogrammierschnittstellen (182) bedarfsgerecht anzupassen, die einem Betriebssystem (101) zur Verfügung gestellt werden, das einige Betriebsumgebungsressourcen (107) herauszieht (abstracts), während andere Bereiche der Betriebsumgebungsressourcen (107P) so offengelegt werden, dass das Betriebssystem die offengelegten Betriebsumgebungsressourcen wahrnimmt, wobei das Computersystem die nachstehenden Bestandteile umfasst:
einen oder mehrere Prozessoren;
Systemspeicher;
ein Betriebssystem (101), das auf einer Vielfalt an Betriebsumgebungen (103) laufen kann, wobei das Betriebssystem so konfiguriert ist, dass es Betriebssystemdienste für anfordernde Anwendungsprogramme (111 a, 111 b), unter Verwendung einer ermittelten Teilmenge einer Vielzahl an unterschiedlichen Dienstalgorithmen (104), zur Verfügung stellt, wobei das Betriebssystem bedarfsgerecht angepasste Betriebssystemdienste für anfordernde Anwendungen auf Grundlage einer offengelegten Funktionalität bereitstellt, die sich in Betriebsumgebungsressourcen (107P) einer zugrunde liegenden Betriebsumgebung ausdrückt, die dem Betriebssystem offengelegt wurden, wobei das Betriebssystem mit einer Betriebsumgebungs-Abstraktionsschicht (102) durch einen bedarfsgerecht angepassten Satz an Schnittstellen in Übereinstimmung mit angepassten Dienstalgorithmen und Abstraktionsalgorithmen verbunden ist, um einen Betriebssystemdienst für eine Anwendung zu implementieren, die den Betriebssystemdienst anfordert; wobei die zugrunde liegende Betriebsumgebung eine Computersystemhardware (203) oder ein Hypervisor (223) oder ein Host-Betriebssytem°(243) ist und Betriebsumgebungsressourcen (107) umfasst, wobei die zugrunde liegende Betriebsumgebung konfiguriert ist, die Betriebsumgebungsressourcen (107) einer Betriebsumgebungs-Abstraktionsschicht (102) zur Verfügung zu stellen, wobei die zugrunde liegende Betriebsumgebung eine von einer Vielzahl unterschiedlicher Betriebsumgebungen ist, auf die das Betriebssystem laufen kann; und
eine Betriebsumgebungs-Abstraktionsschicht (102), die zwischen dem Betriebssystem (101) und der zugrunde liegenden Betriebsumgebung (103) angeordnet ist, wobei die Betriebsumgebungs-Abstraktionsschicht (102) über Schnittstellen (283, 284, 286) kommunikativ mit der zugrunde liegenden Betriebsumgebung gekoppelt ist, wobei die Schnittstellen spezifisch für die Art der zugrunde liegenden Betriebsumgebung sind, und konfiguriert sind, um verfügbare Betriebsumgebungsressourcen (107) der zugrunde liegenden Betriebsumgebung zu ermitteln, und um einen oder mehrere Abstraktionsalgorithmen (106) zu ermitteln, die verwendet werden, um eine Teilmenge der verfügbaren Betriebsumgebungsressourcen (107P) zu ermitteln, um sie dem Betriebssystem offenzulegen und einen einheitlichen Satz an Programmierschnittstellen bedarfsgerecht anzupassen, um die Teilmenge der verfügbaren Betriebsumgebungsressourcen der zugrunde liegenden Betriebsumgebung offenzulegen, wobei die Betriebsumgebungs-Abstraktionsschicht des Weiteren konfiguriert ist, um den bedarfsgerecht angepassten einheitlichen Satz an Programmierschnittstellen dem Betriebssystem offenzulegen, um es dem Betriebssystem zu ermöglichen, auf die offengelegte Teilmenge der verfügbaren Betriebsumgebungsressourcen der zugrunde liegende Betriebsumgebung zuzugreifen.

## Revendications

1. Procédé mis en oeuvre par un ordinateur et implémenté dans un système informatique, le système informatique incluant un système d'exploitation (101), un environnement d'exploitation sous-jacent (103), et une couche d'abstraction d'environnement d'exploitation (102) située entre le système d'exploitation et l'environnement d'exploitation sous-jacent, pour procurer une couche d'abstraction d'environnement d'exploitation afin de personnaliser un ensemble commun d'interfaces de programmation applicative (182) fournies au système d'exploitation qui abstrait certaines ressources d'environnement d'exploitation (107) tout en exposant d'autres portions de ressources d'environnement d'exploitation (107P) de telle sorte que le système d'exploitation est averti des ressources d'environnement d'exploitation exposées, le procédé comprenant :
un acte de détection, par la couche d'abstraction d'environnement d'exploitation (102), de ressources d'environnement d'exploitation disponibles (107) d'un environnement d'exploitation sous-jacent (103), l'environnement d'exploitation sous-jacent comprenant un élément parmi un matériel de système informatique (203), un hyperviseur (223) et un système d'exploitation hôte (243), dans lequel la couche d'abstraction d'environnement d'exploitation est configurée pour communiquer avec l'environnement d'exploitation sous-jacent via des interfaces (283, 284, 286) qui sont spécifiques au type d'environnement d'exploitation sous-jacent ;
un acte de détermination, par la couche d'abstraction d'environnement d'exploitation, d'un ou plusieurs algorithmes d'abstraction (106) utilisés pour déterminer un sous-ensemble (107P) des ressources d'environnement d'exploitation disponibles (107) à exposer au système d'exploitation (101), et pour personnaliser un ensemble commun d'interfaces de programmation applicative (182) afin d'exposer le sous-ensemble des ressources d'environnement d'exploitation disponibles de l'environnement d'exploitation sous-jacent ;
un acte d'exposition, par la couche d'abstraction d'environnement d'exploitation, de l'ensemble commun personnalisé d'interfaces de programmation applicative au système d'exploitation pour permettre au système d'exploitation d'accéder au sous-ensemble exposé des ressources d'environnement d'exploitation disponibles de l'environnement d'exploitation sous-jacent ;
un acte d'ajustement, par le système d'exploitation, d'algorithmes de service (104) utilisés par le système d'exploitation pour procurer des services de système d'exploitation personnalisés à des applications qui les requièrent (111a, 111b) sur base de la fonctionnalité exposée représentée dans les ressources d'environnement d'exploitation exposées au système d'exploitation ;
un acte de réception, par le système d'exploitation, d'une requête du programme d'application pour un service du système d'exploitation ; et
un acte d'interfaçage, par le système d'exploitation, avec la couche d'abstraction d'environnement d'exploitation via l'ensemble commun personnalisé d'interfaces, conformément aux algorithmes de service ajustés et auxdits un ou plusieurs algorithmes d'abstraction déterminés, afin d'implémenter le service de système d'exploitation pour l'application qui le requiert.

2. Procédé selon la revendication 1, dans lequel l'acte de détection, par la couche d'abstraction d'environnement d'exploitation (102), de ressources d'environnement d'exploitation disponibles (107) de l'environnement d'exploitation sous-jacent (103) comprend l'analyse, durant l'initialisation, de l'environnement d'exploitation pour devenir entièrement averti de l'environnement d'exploitation, y compris un ou plusieurs actes parmi :
la détection de ressources disponibles d'un matériel sous-jacent (203) ;
la détection de ressources disponibles d'un hyperviseur sous-jacent (223) ; et
la détection de ressources disponibles d'un système d'exploitation hôte sous-jacent (243).

3. Procédé selon la revendication 1, dans lequel l'acte d'exposition, par la couche d'abstraction d'environnement d'exploitation (102), de l'ensemble personnalisé d'interfaces au système d'exploitation (101) comprend un acte d'utilisation, par la couche d'abstraction d'environnement d'exploitation, d'une interface de programmation applicative API (182), soit Application Programming Interface, pour appeler le système d'exploitation.

4. Procédé selon la revendication 1, dans lequel l'acte, par le système d'exploitation (101), d'interfaçage avec la couche d'abstraction d'environnement d'exploitation (102) pour implémenter le service du système d'exploitation pour l'application qui le requiert (111), (112) comprend un ou plusieurs des actes suivants :
un acte d'envoi, par le système d'exploitation, d'un appel (114) à la couche d'abstraction d'environnement d'exploitation, le type de l'appel étant sélectionné parmi un appel synchrone et un appel asynchrone ;
un acte de transfert, par la couche d'abstraction d'environnement d'exploitation, de la requête du programme d'application à l'environnement d'exploitation sous-jacent ; et
un acte d'implémentation de manière native, par le système d'exploitation, du service de système d'exploitation.

5. Procédé selon la revendication 1, dans lequel le système d'exploitation (101) s'exécute dans un mode de processeur sélectionné parmi le mode utilisateur (311) et le mode noyau (312).

6. Procédé selon la revendication 4, dans lequel la couche d'abstraction d'environnement d'exploitation (102) s'exécute dans un mode de processeur sélectionné parmi le mode utilisateur (311) et le mode noyau (312).

7. Procédé selon la revendication 1, dans lequel l'environnement d'exploitation sous-jacent (103) est une instance du système d'exploitation (101).

8. Support lisible par un ordinateur sur lequel sont stockées des instructions exécutables par un ordinateur qui, lorsqu'elles sont exécutées par un ordinateur, mettent en oeuvre les étapes de l'un quelconque des procédés selon les revendications 1 à 7.

9. Système informatique pour mettre en oeuvre une fonction de système d'exploitation en fournissant une couche d'abstraction d'environnement d'exploitation (102) pour personnaliser un ensemble commun d'interfaces de programmation applicative (182) qui sont fournies à un système d'exploitation (101) qui abstrait certaines ressources d'environnement d'exploitation (107) tout en exposant d'autres portions de ressources d'environnement d'exploitation (107P) de telle sorte que le système d'exploitation est averti des ressources d'environnement d'exploitation exposées, le système informatique comprenant :
un ou plusieurs processeurs ;
de la mémoire système ;
un système d'exploitation (101) qui peut être exécuté dans une variété d'environnements d'exploitation (103), le système d'exploitation étant configuré pour fournir des services de système d'exploitation à des programmes d'application (111a, 111b) qui les requièrent en utilisant un sous-ensemble déterminé d'une pluralité de différents algorithmes de service (104), le système d'exploitation fournissant des services de système d'exploitation personnalisés à des applications qui les requièrent sur base d'une fonctionnalité exposée représentée dans des ressources d'environnement d'exploitation (107P) d'un environnement d'exploitation sous-jacent exposé au système d'exploitation, le système d'exploitation réalisant l'interface avec une couche d'abstraction d'environnement d'exploitation (102) via un ensemble personnalisé d'interfaces conformément à des algorithmes de service et à des algorithmes d'abstraction ajustés pour implémenter un service de système d'exploitation pour une application qui requiert le service de système d'exploitation ;
l'environnement d'exploitation sous-jacent étant un élément parmi un matériel de système informatique (203), un hyperviseur (223) et un système d'exploitation hôte (243), et comprenant des ressources d'environnement d'exploitation (107), l'environnement d'exploitation sous-jacent étant configuré pour fournir les ressources d'environnement d'exploitation (107) à une couche d'abstraction d'environnement d'exploitation (102), l'environnement d'exploitation sous-jacent étant un environnement parmi une pluralité de différents environnements d'exploitation dans lesquels peut être exécuté le système d'exploitation ; et
une couche d'abstraction d'environnement d'exploitation (102) située entre le système d'exploitation (101) et l'environnement d'exploitation sous-jacent (103), la couche d'abstraction d'environnement d'exploitation (102) étant couplée en communication avec l'environnement d'exploitation sous-jacent via des interfaces (283, 284, 286) qui sont spécifiques au type de l'environnement d'exploitation sous-jacent, et étant configurée pour détecter des ressources d'environnement d'exploitation disponibles (107) de l'environnement d'exploitation sous-jacent et pour déterminer un ou plusieurs algorithmes d'abstraction (106) utilisés pour déterminer un sous-ensemble des ressources d'environnement d'exploitation disponibles (107P) pour exposer le système d'exploitation et pour personnaliser un ensemble uniforme d'interfaces de programmation afin d'exposer le sous-ensemble des ressources d'environnement d'exploitation disponibles de l'environnement d'exploitation sous-jacent, la couche d'abstraction d'environnement d'exploitation étant en outre configurée pour exposer l'ensemble uniforme personnalisé d'interfaces de programmation au système d'exploitation pour permettre au système d'exploitation d'accéder au sous-ensemble exposé des ressources d'environnement d'exploitation disponibles de l'environnement d'exploitation sous-jacent.
